# EUROPÄISCHE PATENTANMELDUNG

(11) **EP 2 273 170 A1**
(43) Veröffentlichungstag der Anmeldung: **12.01.2011**
(21) Anmeldenummer: 09008798.2
(22) Anmeldetag: 06.07.2009
(51) Int. Cl.: F16L 5/00, H02G 3/22

(54) **Schalungseinlage für Mauerdurchführung**

(71) Anmelder: Spadin, Bruno, 6315 Oberägeri (CH)
(72) Erfinder: Spadin, Bruno, 6315 Oberägeri (CH)
(74) Vertreter: Rüedi, Regula Béatrice

(57) **Zusammenfassung**

Eine Schalungseinlage (1) für eine Mauerdurchführung umfasst einem Rohr (2), welches zwei Enden (2a, 2b) aufweist, die je durch eine Verschlussplatte (3,4) verschlossen sind, welche mindestens in einem Befestigungsbereich (5) einen grösseren Durchmesser aufweisen als das Rohr (2) an seinen beiden Enden (2a, 2b) und die zur Freilegung des Rohrinnern mit einem Schwächungsbereich (5) versehen sind. Das Rohr der Schalungseinlage (2) kann mit Verbindungselementen (7,8) ausgestaltet sein, beispielsweise mit einer Steckmuffe (7) und einem Käfig (8).

## Beschreibung

### Gebiet der Erfindung

Die Erfindung betrifft Wand- oder Mauerdurchführungen für Innen- und Aussenwänden aus Beton, insbesondere Durchführungen für Installationen im Sanitär-, Heizungs-, Lüftungs- und Energiebereich (Strom und/oder Gas), welche direkt beim Verschalen eingebracht werden können und keine nachträgliche Abdichtung benötigen.

### Hintergrund

Eine Wanddurchführung für einen Fluidstrom wird in DE-U-1 872 956 beschrieben. Hierbei soll eine zuverlässige Abdichtung gegen unerwünschtes Eindringen von Gas durch eine Mauer sowie gleichzeitig eine elektrische Trennstelle geschaffen werden, die das Auftreten gefährlicher Spannungen verhindert. In einem Außenrohr ist an einem Endflansch ein Innenrohr fest verschweißt, das einerseits aus dem Außenrohr axial hinausragt sowie anderseits in diesem nahe eines anderen Flansches endet, der den Rohrinnenraum im wesentlichen verschließt und lediglich einen Anschlussstutzen freilässt. Im Innenrohr verläuft ein Rohranschlussstück mit einem am freien Ende vorgesehenen Gewinde. Dieses Rohranschlussstück ist mit den beiden Enden des Innenrohres durch elastische Balge verbunden, und es endet in einer vom Außenrohr gebildeten Kammer. Diese ist zum Durchführen von Strängen wie Rohren oder Kabeln nicht geeignet, ebenso fehlt es an einer Möglichkeit, in die Kammer hineinzugreifen. Zudem müssten an der Baustelle mindestens vier Abdichtungen hergestellt werden, nämlich zum einen am Rohrstutzen zum Flansch sowie zum anderen vom Innenrohr zum Flansch jeweils als Verschweißung und darüber hinaus an Anschlüssen vom Rohrstutzen zum Innenraum sowie vom Anschlussrohr zum ankommenden Rohr. Die aus elektrisch isolierendem Werkstoff bestehenden Balge bilden je zwei weitere Abdichtungsstellen, so dass mindestens acht Abdichtungsstellen entstehen.

Das aus dem Aussenrohr ragende innere Rohrstück schließt einen Einbau in die Schalung vor der Herstellung der Wand aus, auch ist das am inneren Rohrstück befestigte Anschlussstück nicht über das durchzuführende Rohr legbar, sondern muss an einem weiteren Rohr befestigt werden, das zum Anschluß der Fluidleitung dient.

Die GB-A-1 314 345 zeigt eine Rohrdurchführung mit elastischer Lagerung des inneren Rohrstücks. Diese elastische Lagerung soll das durchzuführende Rohr dicht umschliessen, so dass für jeden Durchmesser des durchzuführenden Rohrs eine eigene Ausführungsform benötigt wird.

EP0275113 beschreibt eine Wanddurchführung für Kabel, Rohre oder dergleichen, die aus möglichst wenig Einzelteilen besteht und das Durchführen in verschiedenen Winkeln zur Wandfläche erlaubt. Diese Durchführung umfasst ein äusseres Rohr mit einem Aussenflansch an einem Ende, sowie ein inneres, durch einen Ringsteg mit dem Aussenrohr verbundenes Rohrstück. Das innere Rohrstück ist kürzer als das Aussenrohr und dient der Aufnahme von beispielsweise einem Kabel, welches gegenüber dem inneren Rohrstück mittels eines elastischen Anschlussstücks abgedichtet ist. Zwischen dem Aussenrohr und dem inneren Rohrstück bleibt ein Hohlraum bestehen.

Alle diese Ausführungsformen des Stands der Technik haben den Nachteil, dass entweder erst eine Aussparung in der Schalung errichtet werden muss, in die nachträglich ein Rohr eingezogen wird, welches gegen die Mauer abgedichtet werden muss, oder dass eine komplexe, aus mehreren Rohren bestehende Ausführungsform vorgesehen wird und/oder dass die Abdichtung gegen die Mauer mangelhaft ist.

Ziel der vorliegenden Erfindung war es deshalb eine Schalungseinlage bereitzustellen, die ein nachträgliches Einführen eines Rohres und ein nachträgliches Abdichten gegenüber der Betonwand unnötig macht und die einfach zu konstruieren ist sowie ein Verfahren unter Verwendung einer solchen Schalungseinlage.

### Darstellung der Erfindung

Die erfindungsgemässe Schalungseinlage für eine Mauerdurchführung umfasst mindestens ein Rohr, welches ein erstes Ende und ein zweites Ende aufweist und das an seinem ersten Ende und an seinem zweiten Ende durch je eine.Verschlussplatte verschlossen ist, welche mindestens in einem Befestigungsbereich einen grösseren Durchmesser aufweist als das Rohr an seinem ersten Ende und an seinem zweiten Ende.

Die Verschlussplatten können jede beliebige Form haben, vorzugsweise sind sie aber rund oder vieleckig, z.B. viereckig, und dienen einerseits dem Schutz des Innenraumes des Rohres vor Verschmutzung, andererseits der Befestigung, z.B. durch Annageln, der Schalungseinlage an der Schalung. Sie sind zur späteren Freilegung des Rohrinneren mit einer Schwächungslinie bzw. einem Schwächungsbereich entlang der Innenwand des Rohres versehen, z.B. mit einer Perforation oder mit einer Materialverdünnung, einer Membrane. Dieser Schwächungsbereich ist vorzugsweise derart gestaltet, dass das Rohr nach Erstellung der Wand und Entfernung der Schalung mittels einfacher Werkzeuge geöffnet werden kann.

In einer einfachen Ausführungsform, die insbesondere als Durchführung durch eine Innenwand geeignet und für eine solche Verwendung vorgesehen ist, hat das Rohr einen über die ganze Länge einheitlichen Durchmesser.

In einer komplexeren Ausführungsform, die insbesondere für Durchführungen durch Aussenwände vorteilhaft ist, ändert sich der Durchmesser in einem Bereich nahe dem ersten Ende und/oder in einem Bereich nahe dem zweiten Ende. Dies ist insbesondere der Fall bei Ausführungsformen, in denen das Rohr mindestens einseitig als ein für den Anschluss eines weiteren Rohres geeignetes Verbindungselement ausgebildet ist, z.B. auf beiden Seiten als Steckmuffe, auf beiden Seiten als Käfig zur Aufnahme einer Steckmuffe oder auf einer Seite als Steckmuffe, und auf der anderen Seite als Käfig zur Aufnahme einer Steckmuffe. Eine Ausführungsform mit Käfig ist ferner derart gestaltet, dass die käfigseitige Verschlussplatte einen vorzugsweise vorhandenen Schwächungsbereich nicht entlang der Innenwand des Rohres sondern entlang der Innenwand des Käfigs aufweist.

Um die Dichtheit einer Verbindung zu einem Anschlussrohr zu verbessern oder zu gewährleisten kann ins Rohr der Schalungseinlage eine Dichtung integriert werden, z.B. ein Dichtungsring, der bereits positioniert sein kann oder aber lediglich innerhalb des Rohres liegend mitgeliefert werden kann, so dass der die Verbindung herstellende Handwerker diese dann an der gewünschten Stelle positionieren kann. Eine erst bei Herstellung der Rohrverbindung positionierte Dichtung ist insbesondere dann vorteilhaft, wenn die Dichtungsauflage nahe dem Rohrende liegt, so dass die Dichtung beim Entfernen des Teils der Verschlussplatten, der das Rohr verschliesst, beschädigt werden könnte.

Für Durchführungen an Aussenwänden ist es bevorzugt, wenn die Schalungseinlage an der Aussenseite mit einer zusätzlichen Wassersperre versehen ist, insbesondere einem wasserquellbaren Dichtungsprofil mit Regenschutzbeschichtung. Diese Wassersperre muss sich bei Anwendung ausreichend innerhalb der Betonwand befinden, um ein Abplatzen der Betonschicht unter dem durch das Quellen erzeugten Druck zu verhindern, aber vorzugsweise möglichst nahe an der Aussenwand, um die eindringende Wassermenge auf ein Minimum zu beschränken. Bei einer Ausführungsform mit Käfig ist das wasserquellbare Dichtungsprofil aussenwandseitig, normalerweise am Rohr knapp oberhalb des Käfigs und dicht an diesen anschliessend angeordnet. Der maximale Abstand von der Aussenwand sollte höchstens dem Abstand bei Anordnung des Dichtungsprofils in der Mitte der Schalungseinlage entsprechen.

Um vorzeitiges Quellen des wasserquellbaren Dichtungsprofils durch im feuchten Beton enthaltenes Wasser zu minimieren bzw. zu verhindern, ist dieses Dichtungsprofil aus trägem Material, so dass für starkes Quellen Feuchtigkeit während längerer Zeit notwendig ist, oder es ist geschützt, beispielsweise durch eine sich unter Fechtigkeitseinwirkung auflösende Folie. Ein solches Material ist beispielsweise erhältlich von der Fa. Vandes, CH-4501 Solothurn/Schweiz unter der Produktebezeichnung VANDEX EXPASEAL B PLUS. Die wasserquellbare Dichtung besteht gemäss Datenblatt aus Polyisobutylenkautschuk / Natrium-Bentonit, speziellen Füllern und Zusätzen sowie einer umhüllend aufgebrachten Schutzbeschichtung.

Die Schalungseinlagen eignen sich üblicherweise sowohl für horizontalen (in Seitenwände) wie auch für vertikal (in Böden bzw. Decken) Einbau und sie können mit einer Durchführung bzw. einem Rohr oder mit mehreren Durchführungen bzw. mehreren Rohren gestaltet sein, wobei diese mehreren Durchführungen bzw. Rohre unabhängig von einander mit gleichen oder verschiedenen Anschlüssen, wie Steckmuffen und Käfigen ausgestaltet sein können. Obschon für die meisten Anwendungen Schalungseinlagen mit senkrecht zu den Verschlussplatten angeordneten Rohren bzw. Durchführungen vorgesehen sind, können die Rohre bzw. Durchführungen gegenüber den Verschlussplatten auch in einem von 90° abweichenden Winkel alpha (α), angeordnet sein, wobei die Verschlussplatten - Spezialanwendungen ausgenommen - stets parallel zu einander liegend angeordnet sind. Ebenfalls möglich ist es, die Durchführungen bzw. Rohre mit "Richtungsänderungen", z.B. Bogen oder Winkeln, zu gestalten, beispielsweise in Form eines stilisierten S oder Z zur Überbrückung von Niveauunterschieden.

Zur Kennzeichnung unterschiedlich gestalteter Rohrenden können die Verschlussplatten verschieden gestaltet sein, z.B. eine grösser als die andere, eine rund und eine quadratisch etc.

Die Herstellung der Schalungseinlage erfolgt vorzugsweise mittels mechanischer Bearbeitung aus Rohr- und Plattenmaterial, und nachträgliches Verschweissen der Einzelteile miteinander. Verschweissen ist speziell geeignet zum Verbinden von Polyolefinmaterialien, insbesondere Polyethylenmaterialien, aber auch Polypropylenmaterialien. Ein gut geeignetes Schweissverfahren ist Heissluftschweissen.

Die Herstellung einer Betonwand unter Verwendung einer erfindungsgemässen Schalungseinlage umfasst das Errichten einer Verschalung mit darin eingebrachter und fixierter Schalungseinlage, Füllen der Schalung mittels Gussbeton unter gleichzeitiger Ummantelung der Schalungseinlage, Härtung des Betons, Entfernen der Verschalung und Entfernen des innerhalb des Schwächungsbereichs liegenden Teils der Verschlussplatten. Gegebenenfalls kann ein aussen an einer Aussenwand/Aussenmauer angeordneter Käfig nach Herstellung der Verbindung, d.h. nach dessen Verbindung mit einer Steckmuffe, zur besseren Abdichtung mit Dichtmaterial gefüllt werden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1 den Querschnitt durch eine horizontal angeordnete Schalungseinlage für Innenwände zur Durchführung von endlosen Rohren (Kabeln;
Figur 2 den Querschnitt durch eine horizontal angeordnete Schalungseinlage für Aussenwände zur Durchführung von endlosen Rohren (Kabeln);
Figur 3 den Querschnitt durch eine Schalungseinlage für Aussenwände zur Steckverbindung von Medien führenden Rohren;
Figur 4 den Querschnitt durch eine Schalungseinlage für Aussenwände zur Steckverbindung von Kabelschutzrohren;
Figur 5 den Querschnitt durch eine Schalungseinlage für Innenwände zur Mehrfachdurchführung von endlosen Rohren (Kabeln);
Figur 6 den Querschnitt durch eine Schalungseinlage mit mehreren in einem Winkel *alpha* angeordneten Durchführungen, zur Mehrfachdurchführung von endlosen Rohren (Kabeln).

Obschon in allen Figuren horizontaler Einbau dargestellt ist, eignen sich alle Schalungseinlagen auch für vertikalen Einbau.

### Legende

- 1: Schalungseinlage
- 2: Rohr
2a erstes Ende
2b zweites Ende
- 3: erste Verschlussplatte
- 4: zweite Verschlussplatte
- 5: Befestigungsbereich
- 6: Schwächungsbereich
6a Membrane
- 7: Verbindungselement, Steckmuffe
- 8: Verbindungselement, Käfig
8a Käfigwand
8b Rohrende bzw. Nippel
- 9: Dichtung
9a Aufnahme
- 10: Wassersperre
- 11: Nagelloch
- 12: Stützplatte
- 13: Betonwand
- *alpha*: (α) Winkel

### Weg(e) zur Ausführung der Erfindung

In den Figuren werden für gleiche Teile stets die gleichen Bezugszeichen verwendet. Bei gleichbleibenden Merkmale wird deshalb auf eine wiederholte Beschreibung derselben zu jeder Ausführungsform verzichtet.

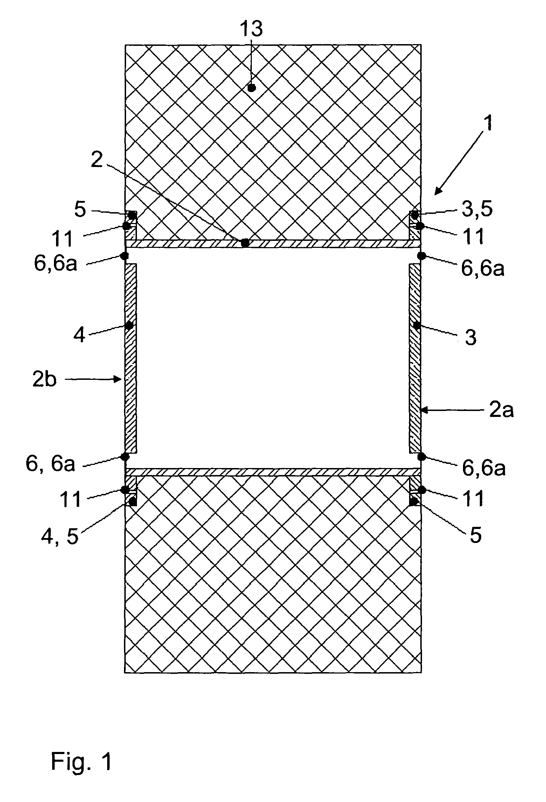

Figur 1 zeigt eine Schalungseinlage 1 für eine Innenwand, bei der keinerlei speziellen Massnahmen zur Minimierung von Beeinträchtigungen infolge von Umwelteinflüssen notwendig sind, nach Fertigstellung der Betonwand 13 und nach Entfernen der Schalung. Diese Schalungseinlage umfasst bzw. besteht im wesentlichen aus einem Rohr 2, das stirnseitig mit einer ersten Verschlussplatte 3 an einem ersten Ende 2a und einer zweiten Verschlussplatte 4 an einem zweiten Ende 2b verschlossen ist. Diese Verschlussplatten 3,4, erstrecken sich mindestens in einem Befestigungsbereich 5 über den äusseren Umfang des Rohres 2 hinaus, derart, dass diese überstehenden Bereiche 5 zur Befestigung der Schalungseinlage 1 an der Schalung (nicht dargestellt) verwendet werden können. Zum Zweck der Befestigung, beispielsweise durch Festnageln, können im Befestigungsbereich Nagellöcher 11, vorgesehen werden. In dieser einfachen Ausführungsform ändert sich der Durchmesser des Rohres über dessen Länge nicht.

In einer bevorzugten Ausführungsform befindet sich in den Verschlussplatten 3,4, benachbart der inneren Wandfläche des Rohres 2, je ein Schwächungsbereich 6. Dieser Schwächungsbereich 6 kann eine Schwächungslinie, z.B. eine Perforation oder eine Einkerbung bzw. eine Teilstanzung sein, oder aber ein breiterer Bereich, eine z.B. ringförmige oder kreisförmige Membrane 6a. Der Schwächungsbereich 6 ist vorzugsweise derart gestaltet, dass das Rohr 2 nach Erstellung der Wand und Entfernung der Schalung mittels einfacher Werkzeuge geöffnet werden kann. Nach Einbau einer solchen Schalungseinlage 1 in die fertige Wand, der direkt beim Giessen der Wand ohne nachträgliche Abdichtung erfolgt, wird dann der das Rohr verschliessende Teil der Verschlussplatten 3,4 entfernt und die gewünschten Leitungen/Kabel können nun problemlos angeschlossen bzw. verlegt werden.

Die Verschlussplatten 3,4 können jede beliebige symmetrische oder asymmetrische Form haben, sie werden aber üblicherweise rund bzw. oval oder viereckig (quadratisch oder rechteckig) sein. Bei quadratischen Verschlussplatten 3,4 über einem senkrecht zu diesen angeordneten Rohr 2 ragen zumindest die Eckbereiche über das Rohr hinaus und bilden die Befestigungsbereiche 5.

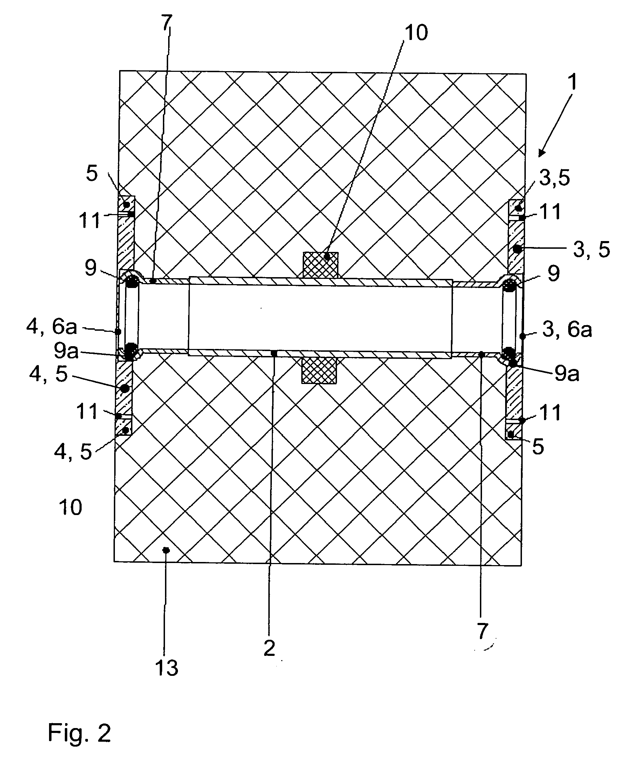

Eine Schalungseinlage zur Durchführung von endlosen Rohren (Kabeln) durch Aussenwände ist in Figur 2 dargestellt. Diese unterscheidet sich von der Schalungseinlage für Innenwände gemäss Figur 1 im wesentlichen dadurch, dass mindestens aussenwandseitig, üblicherweise beidseitig, eine Steckmuffe 7 vorgesehen ist.

Um die Dichtheit einer Verbindung zu einem Anschlussrohr zu verbessern oder zu gewährleisten kann ins Rohr, z.B. in die Steckmuffe, eine Dichtung 9 integriert werden, z.B. ein Dichtungsring, der bereits positioniert sein kann oder aber lediglich innerhalb des Rohres liegend mitgeliefert werden kann, so dass der die Verbindung herstellende Handwerker diese dann an der gewünschten Stelle positionieren kann. Die Ausführungsform mit innen liegender aber nicht positionierter Dichtung 9 ist bevorzugt, wenn Beschädigung einer nahe dem Schwächungsbereich 6, 6a anzuordnender Dichtung 9 beim Heraustrennen (üblicherweise Herausschneiden) der Verschlussplatte oder - wie in Figur 2 gezeigt - der Membrane 6a, welche die Durchführung während des Einbaus verschliesst, vermieden werden soll. Diese Dichtung 9 kann in einer Aufnahme 9a, beispielsweise einer Nut, positioniert sein bzw. werden (siehe z.B. Figur 2).

Die Mitlieferung einer Dichtung innerhalb der Durchführung ist nicht zwingend, aber stark bevorzugt um sicherzustellen, dass bei Weiterverwendung der Schalungseinlage die richtige Dichtung vorhanden ist.

In einer Ausführungsform, wie sie Figur 2 zugrunde liegt, kann sich der innere Rohrdurchmesser im Bereich der Steckmuffe ändern oder er kann (wie dargestellt) über den gesamten Durchführungsbereich (gegebenenfalls mit Ausnahme einer Aufnahme für den Dichtungsring) gleich bleiben.

Für Durchführungen an Aussenwänden ist es bevorzugt, wenn die Schalungseinlage 1 mit einer zusätzlichen Wassersperre 10 versehen ist, insbesondere einem wasserquellbaren Dichtungsprofil mit Regenschutzbeschichtung. Das wasserquellbare Dichtungsprofil ist vorzugsweise aussen an der äussersten Wand angeordnet. Wichtig ist, das die Wassersperre 10 an einer Stelle weit genug innerhalb der Betonschicht angeordnet ist, dass ein Abplatzen des Betons bei Quellung verhindert wird. Um den Eintritt grösserer Mengen Wasser zu verhindern, ist es ferner bevorzugt, dass sie möglichst nahe an der Stelle des zu verhindernden Wasserzutritts liegt. Insbesondere bei symmetrischen Ausführungsformen kann es - um den Einbau zu erleichtern - auch vorteilhaft sein, die Wassersperre 10 zentral, das heisst in der Mitte der Schalungseinlage an der Aussenwand des Rohres anzubringen.

Die Regenschutzbeschichtung verhindert sowohl das vorzeitige Quellen bei Lagerung im Freien vor Einbau in die Mauer als auch ein Quellen während des Aushärtens des Betons. Als Lagerschutz kann alternativ oder zusätzlich ein entfernbarer Wasserschutz, z.B. eine abziehbare Schutzfolie, eingesetzt werden. Alternativ zu einer Regenschutzbeschichtung kann das Dichtungsprofil selbst aus trägem Material hergestellt werden, so dass für starkes Quellen Feuchtigkeit während längerer Zeit notwendig ist.

Ein für die Herstellung des wasserquellbaren Dichtungsprofils geeignetes Material mit Regenwasserschutz ist beispielsweise VANDEX EXPASEAL B PLUS der Fa. Vandes in Solothurn, Schweiz.

VANDEX EXPASEAL B PLUS quillt infolge Wasserkontakts über 300%. Durch den dabei entstehenden Anpressdruck presst das Quellband VANDEX EXPASEAL B PLUS die Oberflächen formgenau an und verhindert einen Wasserdurchfluss.

Die Regenschutzbeschichtung verhindert ein vorzeitiges Quellen durch Regen wirkungsvoll während 2 bis 3 Tagen. Die Beschichtung wirkt pH-Wert-abhängig: Sie ist resistent gegen neutrales Regenwasser (pH ca. 7), der alkalische Frischbeton (pH > 11) hingegen löst die Beschichtung chemisch auf. Durch die Schutzschicht wird der Quellvorgang bis zu deren erfolgter Auflösung, im vorliegenden Fall insbesondere während der Aushärtung des Betons, verhindert. Ist die Auflösung der Schicht während der Härtung des Betons nicht vollständig, so wird diese aufgrund der weiterhin vorhandenen alkalischen Umgebung bei Wasserzutritt weiter vorangetrieben, wonach der Quellvorgang des Bandes bei (weiterem) Wasserzutritt ungehindert ausgelöst wird. Die hier beschriebenen Ausführungsformen für Dichtungsprofile sind für alle erfindungsgemässen Schalungseinlagen geeignet.

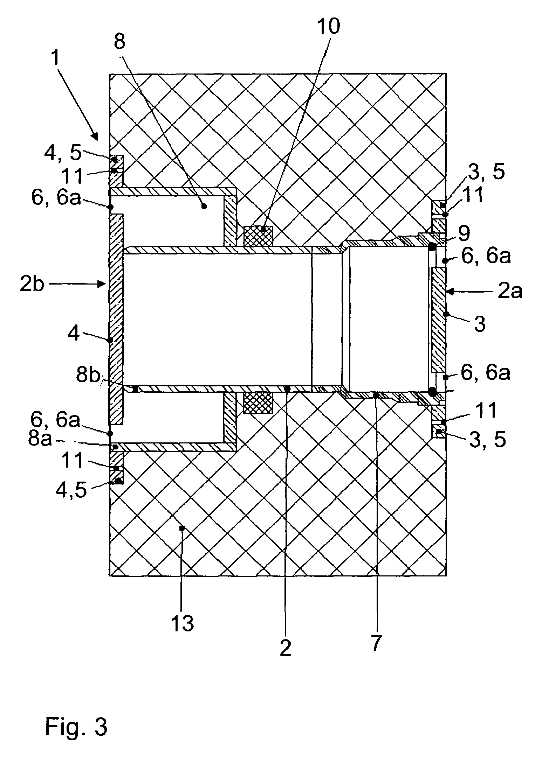

Eine komplexere Ausführungsform einer erfindungsgemässen Schalungseinlage, die ebenfalls primär für Aussenwände und insbesondere zur Steckverbindung mit Medien führenden Rohren konzipiert ist, ist in Figur 3 dargestellt. In dieser Ausführungsform ist der Rohrdurchmesser variabel, insbesondere im Bereich des ersten Endes 2a und/oder im Bereich des zweiten Endes 2b. Dies ist insbesondere der Fall bei Ausführungsformen, die mindestens einseitig ein für den Anschluss eines weiteren Rohres ausgebildetes Verbindungselement 7,8b aufweisen. Ein solches Verbindungselement kann z.B. auf einer Seite, z.B. an einem ersten Ende 2a, als Steckmuffe 7 ausgebildet sein, und auf der anderen Seite, am zweiten Ende 2b, als ein Käfig 8 zur Aufnahme einer Steckmuffe. Der Käfig 8 wird gebildet durch eine Käfigwand 8a und das Rohrende bzw. einen Nippel 8b. Eine Ausführungsform mit Käfig 8 ist derart gestaltet, dass die käfigseitige Verschlussplatte den Schwächungsbereich nicht entlang der Innenwand des Rohres 2 bzw. Nippels 8b sondern entlang der Innenwand der Käfigwand 8a aufweist.

Auch in dieser Ausführungsform wird vorzugsweise eine Wassersperre 10, insbesondere ein wasserquellbares Dichtungsprofil 10, vorgesehen. Dieses ist ebenfalls aussen an der äussersten Wand angeordnet, bei einer Ausführungsform mit Käfig aussen an der Käfigwand oder - bevorzugt - aussen an der Rohrwand in einem direkt an den Käfig anschliessenden Bereich. Wichtig ist auch hier, dass die Wassersperre 10 an einer Stelle liegt, die möglichst nahe an der Stelle des zu verhindernden Wasserzutritts liegt, aber dennoch weit genug innerhalb der Betonschicht, dass ein Abplatzen des Betons bei Quellung verhindert wird.

In einer alternativen Ausführungsformen zu den in den Figuren 2 und 3 gezeigten Ausführungsformen kann die Schalungseinlage 1 auch beidseitig einen Käfig aufweisen (nicht gezeigt).

Zur weiteren Abdichtung des Käfigs kann dieser nach Herstellung der Verbindung, d.h. nach Befestigen der Steckmuffe mit Dichtmaterial ausgefüllt werden.

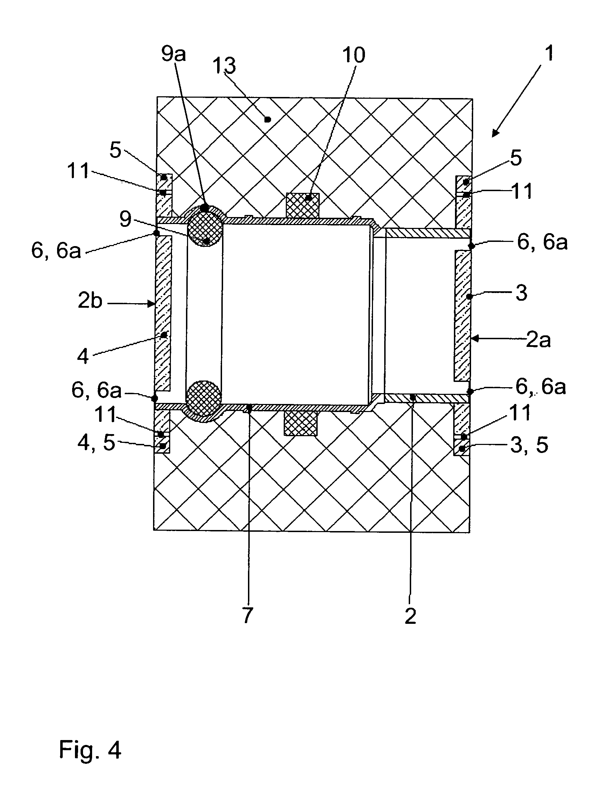

Eine weitere Ausführungsform einer erfindungsgemässen Schalungseinlage ist in Figur 4 dargestellt. Diese ist speziell für die Steckverbindung von Kabelschutzrohren geeignet. In dieser Ausführungsform nimmt die Steckmuffe 7 mehr als die Hälfte der gesamten Rohrlänge von Ende 2a zu Ende 2b ein. Das wasserquellbare Dichtungsprofil 10 ist deshalb an der äusseren Rohrwand im Bereich der Steckmuffe 7 angebracht.

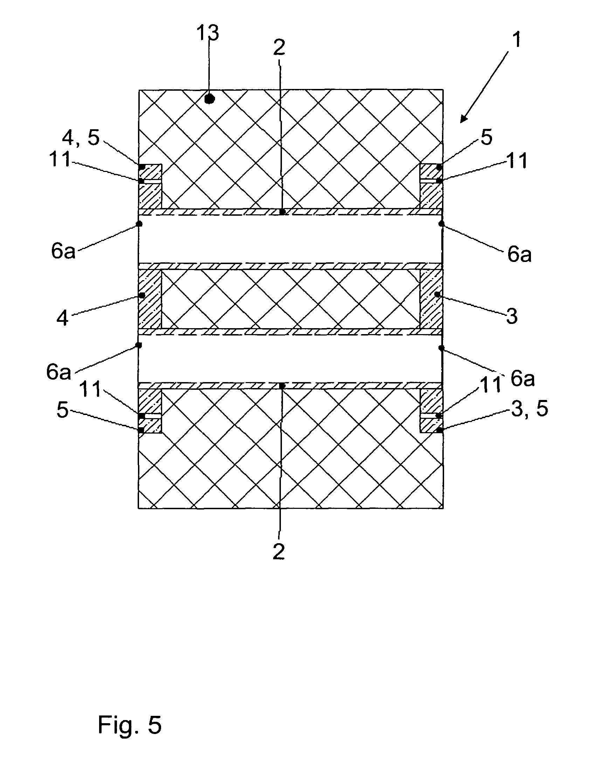

Eine erfindungsgemässe Schalungseinlage kann mehr als eine Durchführung bzw. mehr als ein Rohr 2 aufweisen. Eine Ausführungsform für Innenwände zur Mehrfachdurchführung von endlosen Rohren (Kabeln) ist in Figur 5 dargestellt. Anstelle des in Figur 5 gezeigten Verschlusses der Durchführungen mittels Membranen 6a kann der Verschluss des Rohres 2 auch mittels einer Verschlussplatte 3,4 erfolgen, die z.B. nur in einem Schwächungsbereich zur Membrane verdünnt wurde (siehe Figur 1). Eine solche Schalungseinlage kann je nach Bedarf mit mehr oder weniger Durchführungen gestaltet werden, üblicherweise mit 2 bis 16, beispielsweise mit 12 Durchführungen. Die Anordnung dieser Durchführungen kann in einer oder mehreren Reihen erfolgen, beispielsweise in zwei oder drei gegeneinander versetzten Reihen. Wichtig ist, dass die Anordnung und der Abstand der Durchführungen bzw. Rohre derart ist, dass der Beton guten Zutritt zu den Zwischenräumen hat, so dass vollständige Einbetonierung der Schalungseinlage ohne verbleibende Hohlräume zwischen den Rohren bzw. Durchgängen gewährleistet ist.

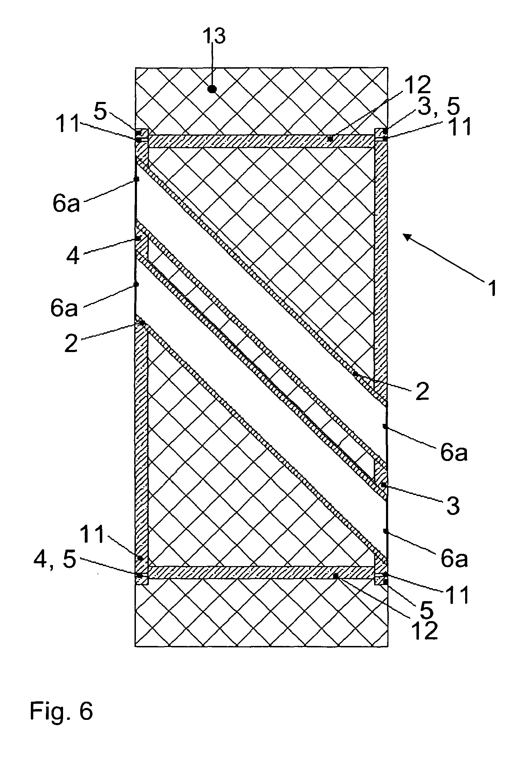

Die erfindungsgemässe Schalungseinlage 1 wird üblicherweise derart gestaltet sein, dass der Mauer- bzw. Wanddurchgang horizontal (Seitenwände) bzw. vertikal (Boden/Decke) angeordnet ist (Figuren 1 bis 5). Bei Bedarf kann die Schalungseinlage aber auch so gestaltet werden, dass der Rohrverlauf bzw. die Längsachse des Rohres 2 in einem Winkel *alpha* (α) zur Oberfläche der Wand bzw. des Bodens etc. angeordnet ist, der kein 90° Winkel ist. Die Verschlussplatten 3,4 sind in dieser Ausführungsform in einem entsprechenden, von 90° abweichenden Winkel *alpha* angeordet. Eine solche Ausführungsform mit mehreren Durchgängen ist in Figur 6 dargestellt. Zur Stabilisierung einer solchen Ausführungsform ist es bevorzugt, wenn zwischen den Verschlussplatten 3 und 4 und im wesentlichen senkrecht zu diesen Stützplatten oder Stützpfeiler 12 angeordnet sind. Bei der Verwendung von Stützplatten oder Stützpfeilern 12 ist - wie bei der Gestaltung mit mehreren Durchgängen - lediglich zu beachten, dass diese den Betonzutritt zur und damit das Einmauern der Schalungseinlage 1 nicht beeinträchtigen.

Zur Kennzeichnung unterschiedlich gestalteter Rohrenden können die Verschlussplatten der erfindungsgemässen Schalungseinlagen 1 verschieden gestaltet sein, z.B. eine grösser als die andere, eine rund und eine quadratisch oder eine rund oder quadratisch und eine sechseckig etc.

Die Herstellung der erfindungsgemässen Schalungseinlagen 1 erfolgt vorzugsweise mittels mechanischer Bearbeitung aus Rohr- und Plattenmaterial, und nachträgliches Verschweissen der Einzelteile miteinander. Verschweissen ist insbesondere geeignet zum Verbinden von Polyolefinmaterialien, wie insbesondere Polyethylen aber auch Polypropylen.

Alternativ können die Bestandteile der Schalungseinlage 1 teilweise oder vollständig, z.B. das mit Verbindungselementen ausgestaltete Rohr und/oder die mit Schwächungsbereichen versehenen Verschlussplatten, im Spritzgussverfahren hergestellt werden. Dieses Verfahren eignet sich vor allem bei grossen Stückzahlen.

Die Herstellung einer Betonwand unter Verwendung einer erfindungsgemässen Schalungseinlage 1 umfasst das Errichten einer Verschalung mit darin eingebrachter und fixierter Schalungseinlage 1, Füllen der Schalung mittels Gussbeton unter gleichzeitiger Ummantelung der Schalungseinlage, Härten des Betons, Entfernen der Verschalung und Entfernen des innerhalb des Schwächungsbereichs liegenden Teils der Verschlussplatten 3,4.

Anschliessend können die notwendigen Rohre bzw. Kabel eingezogen oder angeschlossen werden, gegebenenfalls gefolgt von Abdichtung des Käfigs an einer Aussenwand.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Schalungseinlage (1) für eine Mauerdurchführung mit mindestens einem Rohr (2), welches ein erstes Ende (2a) und ein zweites Ende (2b) aufweist, **dadurch gekennzeichnet, dass** es an seinem ersten Ende (2a) und an seinem zweiten Ende (2b) durch je eine Verschlussplatte (3,4) verschlossen ist, welche mindestens in einem Befestigungsbereich (5) einen grösseren Durchmesser aufweist als das Rohr (2) an seinem ersten Ende (2a) und an seinem zweiten Ende (2b).

2. Schalungseinlage (1) gemäss Anspruch 1, **dadurch gekennzeichnet, dass** der Durchmesser des Rohres (2) in einem Bereich benachbart zu seinem ersten Ende (2a) und/oder in einem Bereich benachbart zu seinem zweiten Ende (2b) variiert.

3. Schalungseinlage (1) gemäss Anspruch 1 oder 2, **dadurch gekennzeichnet, dass** das Rohr (2) an seinem ersten Ende (2a) und/oder an seinem zweiten Ende (2b) als Verbindungselement ausgebildet ist.

4. Schalungseinlage (1) gemäss irgend einem der vorangehenden Ansprüche, **dadurch gekennzeichnet, dass** das Rohr (2) im Bereich des ersten Endes (2a) und/oder im Bereich des zweiten Endes (2b) Teil eines Käfigs (8) zur Aufnahme einer Steckmuffe bildet.

5. Schalungseinlage (1) gemäss Anspruch 1, **dadurch gekennzeichnet, dass** der Durchmesser über die gesamte Länge des Rohres konstant ist.

6. Schalungseinlage (1) gemäss irgend einem der vorangehenden Ansprüche, **dadurch gekennzeichnet, dass** die Verschlussplatten (3,4) mit einem Schwächungsbereich (6), z.B. einer Perforation oder Teilstanzung und insbesondere mit einer Membrane versehen sind.

7. Schalungseinlage (1) gemäss irgend einem der vorangehenden Ansprüche, **dadurch gekennzeichnet, dass** sich die Verschlussplatte (3) am ersten Ende (2a) von der Verschlussplatte (4) am zweiten Ende (2b) unterscheidet.

8. Schalungseinlage (1) gemäss irgend einem der vorangehenden Ansprüche, **dadurch gekennzeichnet, dass** sie mindestens eine Dichtung (9), insbesondere mindestens einen Dichtungsring aufweist.

9. Schalungseinlage (1) gemäss Anspruch 8, **dadurch gekennzeichnet, dass** die Dichtung (9) innerhalb des Rohres (2) aber nicht positioniert ist.

10. Schalungseinlage (1) gemäss irgend einem der vorangehenden Ansprüche, **dadurch gekennzeichnet, dass** sie aussen eine Wassersperre (10), insbesondere ein wasserquellbares Dichtungsprofil, speziell bevorzugt ein wasserquellbares Dichtungsprofil mit Regenschutz, aufweist.

11. Schalungseinlage (1) gemäss Anspruch 10, **dadurch gekennzeichnet, dass** die Wassersperre (10) ein wasserquellbares Dichtungsprofil ist, insbesondere ein wasserquellbares Dichtungsprofil mit Regenschutz, und dass sie aussen am Rohr, in einem Bereich direkt oberhalb des Käfigs angeordnet ist.

12. Schalungseinlage (1) gemäss irgendeinem der vorangehenden Ansprüche, **dadurch gekennzeichnet, dass** das mindestens eine Rohr (2) senkrecht zu den Verschlussplatten (3, 4) angeordnet ist.

13. Schalungseinlage (1) gemäss irgendeinem der vorangehenden Ansprüche, **dadurch gekennzeichnet, dass** sie mindestens 2 Rohre (2) aufweist.

14. Verfahren zur Herstellung einer Schalungseinlage (1) gemäss irgend einem der vorangehenden Ansprüche, **dadurch gekennzeichnet, dass** die Einzelteile mittels mechanischer Bearbeitung aus Rohrmaterial und Plattenmaterial hergestellt und anschliessend miteinander verschweisst werden.

15. Herstellung einer Betonwand, **dadurch gekennzeichnet, dass** eine Schalungseinlage gemäss irgend einem der Ansprüche 1 bis 13 in die Schalung eingenagelt und mit Beton umgossen wird und dass nach Aushärtung des Betons und Entfernen der Schalung der innerhalb des Schwächungsbereichs liegende Teil der Verschlussplatten (3,4) herausgetrennt wird.
